# EUROPÄISCHE PATENTSCHRIFT

(11) **EP 4 366 959 B1**
(45) Veröffentlichungstag und Bekanntmachung des Hinweises auf die Patenterteilung: **10.12.2025**
(21) Anmeldenummer: 22741752.4
(22) Anmeldetag: 05.07.2022
(51) Int. Cl.: B60C 23/00, B60C 23/10

(54) **REIFENBEFÜLLUNGSSYSTEM UND NUTZFAHRZEUG MIT EINEM REIFENBEFÜLLUNGSSYSTEM SOWIE VERFAHREN ZUM BETREIBEN EINES REIFENBEFÜLLUNGSSYSTEMS**
TYRE-INFLATING SYSTEM AND COMMERCIAL VEHICLE WITH A TYRE-INFLATING SYSTEM, AND METHOD FOR OPERATING A TYRE-INFLATING SYSTEM
SYSTÈME DE GONFLAGE DE PNEU ET VÉHICULE UTILITAIRE DOTÉ D'UN SYSTÈME DE GONFLAGE DE PNEU, ET PROCÉDÉ DE FONCTIONNEMENT D'UN SYSTÈME DE GONFLAGE DE PNEU

(30) Priorität: 06.07.2021 DE 102021117410
(43) Veröffentlichungstag der Anmeldung: 15.05.2024
(73) Patentinhaber: SAF-HOLLAND GmbH, 63856 Bessenbach (DE)
(72) Erfinder: AMRHEIN, Sandra, 97833 Frammersbach (DE); WEBER, Elmar, 48249 Dülmen (DE); SCHÄFERS, Simon, 61130 Nidderau-Erbstadt (DE); HEROLD, Maximilian, 64760 Oberzent-Beerfelden (DE); STEGMANN, Rainer, 63768 Hösbach (DE)
(74) Vertreter: Müller Schupfner & Partner Patent- und Rechtsanwaltspartnerschaft mbB (Muc)
(86) Internationale Anmeldenummer: PCT/EP2022/068504
(87) Internationale Veröffentlichungsnummer: WO 2023/280802

(56) Entgegenhaltungen:
- WO-A1-2019/014640
- AT-U1- 9 131
- DE-A1- 10 343 621
- DE-A1- 102008 062 048
- DE-A1- 102012 105 769
- DE-A1- 102015 115 642
- DE-T5- 112017 000 471

## Beschreibung

Die Erfindung betrifft ein Reifenbefüllungssystem sowie ein Nutzfahrzeug mit einem Reifenbefüllungssystem und ein Verfahren zum Betreiben eines Reifenbefüllungssystems.

Reifenbefüllungssysteme sind bereits aus dem Stand der Technik bekannt. Diese dienen dazu, während der Fahrt oder ohne eine fahrzeugexterne Druckluftquelle Luft in einen Reifen des Fahrzeugs zu fördern, um so den dort benötigten Luftdruck erreichen zu können. Die bekannten Systeme benutzen dabei die auf dem Fahrzeug vorhandene Druckluftversorgung zum Befüllen des Reifens, wobei das über dem Systemdruck liegende Reifendruckniveau durch eine Pumpe des Reifenbefüllungssystems erreicht wird. Um einen zu hohen Druck im Reifen zu vermeiden, wird dabei ein Druckregelventil verwendet, welches automatisch ein Befüllen des oder der Reifen beim Erreichen des eingestellten Drucks verhindert. Problematisch bei den aus dem Stand der Technik bekannten Systemen ist jedoch, dass durch das Druckregelventil der Solldruck der Reifen nur schwer oder gar nicht eingestellt werden kann.

Die US 2007/0144171 A1 zeigt ein Druckluftregulierungssystem für den Druck von Reifen, welche an einem Fahrzeug angebracht sind. Das beschriebene Reifendruckregulierungssystem umfasst eine Quelle von Druckluft sowie ein internes Verbrennungsmotoraggregat, welches mit einem Turbolader ausgestattet ist, wobei der Turbolader wiederum als Quelle für die Druckluft agiert.

DE 10 2008 062 048 A1 betrifft ein Reifendruckregelsystem für Fahrzeuge mit pneumatischen Reifen und ein Verfahren zur Reifendruckregelung. Das Reifendruckregelsystem weist einen Reifendrucksensor und ein Reifenventil auf. Ein Druckverteiler wirkt mit Schaltventilen mit einem Steuer- und Regelgerät zusammen. Über eine Druckkupplung ist das Reifendruckregelsystem mit einer Druckzuleitung verbunden.

Es ist daher die Aufgabe der vorliegenden Erfindung, ein System bereitzustellen, welches eine einfache und leicht einzustellende und sichere Befüllung von Reifen eines Fahrzeugs, insbesondere eines Nutzfahrzeugs, ermöglicht.

Diese Aufgabe wird mit einem Nutzfahrzeug gemäß dem Anspruch 1 und mit einem Verfahren zum Betreiben eines Reifenbefüllungssystems gemäß dem Anspruch 11 gelöst. Weitere Merkmale, Vorteile und Ausführungsformen ergeben sich aus den Unteransprüchen, der Beschreibung sowie aus den Figuren.

Erfindungsgemäß ist ein Reifenbefüllungssystem, insbesondere für den Einsatz in einem Nutzfahrzeug vorgesehen. Vorteilhafterweise umfasst das Reifenbefüllungssystem eine Steuereinheit, einen Strömungseingang, einen Drucksensor, ein schaltbares, insbesondere ein elektrisch oder magnetisch schaltbares, Ventil und einen Strömungsausgang, wobei der Strömungseingang mit einem Druckluftsystem, insbesondere mit einem Druckluftsystem einer Luftfeder, verbunden ist oder verbindbar ist, wobei der Strömungsausgang mit einem Druckraum eines Reifens verbunden ist oder verbindbar ist, wobei die Steuereinheit mit dem Drucksensor und dem schaltbaren Ventil verbunden ist, wobei der Drucksensor in der Lage ist, einen Druck am Strömungsausgang oder am Strömungseingang zu erfassen, wobei die Steuereinheit derart ausgebildet ist, dass diese das schaltbare Ventil in Abhängigkeit von dem erfassten Druck öffnet und/oder schaltet, insbesondere wenn der erfasste Druck am Strömungsausgang einen Schwellenwert unterschreitet oder überschreitet. Das Reifenbefüllungssystem dient dazu, einen Reifen mit Druckluft zu befüllen, um so den erforderlichen Druck in einem Reifen zu erreichen. Das Reifenbefüllungssystem ist insbesondere an einem Nutzfahrzeug, insbesondere einem Nutzfahrzeuganhänger, angebracht. Ein Nutzfahrzeug im Sinne der Erfindung ist insbesondere ein Fahrzeug, welches ein zulässiges Gesamtgewicht von über 3,5 t, bevorzugt von über 7,5 t, besonders bevorzugt von über 15 t, und besonders stark bevorzugt von über 18 t aufweist. Das Nutzfahrzeug kann ein Anhänger, insbesondere ein Sattelauflieger, und/oder ein gezogenes Fahrzeug sein. Das Nutzfahrzeug ist insbesondere ein straßentaugliches und/oder ein straßengebundenes Fahrzeug. Das erfindungsgemäße Reifenbefüllungssystem weist einen Strömungseingang auf, wobei durch diesen Strömungseingang Luft in das Reifenbefüllungssystem strömen kann. Vorteilhafterweise ist dabei der Strömungseingang mit einem Druckluftsystem, insbesondere des Nutzfahrzeugs, verbunden. Das Reifenbefüllungssystem kann mit einem Druckluftsystem des Nutzfahrzeugs betrieben bzw. befüllt werden. Vorteilhafterweise kann dieser Strömungseingang auch der Energieanschluss für die oder eine Drucksteigerungseinheit des Reifenbefüllungssystems sein. Ein Druckluftsystem des Nutzfahrzeugs, welches mit dem Strömungseingang verbunden ist, kann insbesondere dasjenige Druckluftsystem des Nutzfahrzeugs sein, welches zum Betreiben der oder einer Luftfeder des Nutzfahrzeugs genutzt bzw. verwendet wird. Alternativ oder zusätzlich bevorzugt kann das Fahrzeug auch eine mechanische Federung aufweisen. Der Strömungseingang kann sicherheitshalber einen Eingangsabsperrhahn aufweisen, um das Reifenbefüllungssystem strömungstechnisch vom Druckluftsystem zu trennen. Des Weiteren weist das Reifenbefüllungssystem auch einen Strömungsausgang auf, wobei der Strömungsausgang mit dem Druckraum eines Reifens oder mehrere Reifen verbunden oder verbindbar ist. Der Druckraum eines Reifens im Sinne der Erfindung ist dabei das von dem Reifen umschlossene Volumen, welches während des Betriebs einen gewissen Luftdruck aufweisen muss, um ein ordnungsgemäßes Abrollen und/oder Betreiben des Reifens auf der Straße gewährleisten zu können. Vorteilhafterweise ist das Reifenbefüllungssystem, welches grundlegend auch als Befüllsystem bezeichnet werden kann, nicht lastabhängig geregelt. In anderen Worten kann das Reifenbefüllungssystem reifenlastunabhängig betrieben werden oder ist reifenlastunabhängig. Daher kann das Reifenbefüllungssystem somit unabhängig von der Last der Reifen arbeiten. Dies ist wegen der Betriebssicherheit besonders vorteilhaft. Der Strömungseingang des Befüllungssystems kann dazu dienen, Druckluft in das Reifenbefüllungssystem einzuführen und der Strömungsausgang dazu, Luft von dem Reifenbefüllungssystem in den oder die zu befüllenden Reifen zu fördern. Neben dem Strömungseingang und dem Strömungsausgang verfügt das Reifenbefüllungssystem auch über eine Steuereinheit, sowie zumindest einen Drucksensor und über ein schaltbares Ventil. Die Steuereinheit ist derart mit dem Drucksensor (informationstechnisch) verbunden, sodass der vom Drucksensor erfasste Messwert an die Steuereinheit informationstechnisch übertragen werden kann. Darüber hinaus ist auch das schaltbare Ventil mit der Steuereinheit verbunden, sodass die Steuereinheit den Schaltzustand des schaltbaren Ventils beeinflussen bzw. schalten oder steuern kann. Bevorzugt ist das schaltbare Ventil oder die schaltbaren Ventile ein Magnetventil, um eine besonders einfache und sichere Schaltung des Ventils zu erreichen. Vorteilhafterweise ist die Steuereinheit mit einem Bussystem, insbesondere einem CAN-Bussystem des Fahrzeugs verbunden, an welchem das Reifenbefüllungssystem angeordnet ist. Hierdurch kann die Steuereinheit Informationen an weitere Steuereinheiten des Fahrzeugs, insbesondere des Nutzfahrzeugs, übermitteln und/oder von diesen empfangen. Der Drucksensor des Reifenbefüllungssystems ist insbesondere derart angeordnet und/oder ausgelegt, sodass dieser einen Druck am Strömungsausgang und/oder am Strömungseingang erfassen kann. Vorteilhafterweise kann sich diese Druckerfassung dabei auf den statischen Druck beschränken und/oder der Drucksensor kann auch in der Lage sein, den dynamischen Druck zu erfassen. Vorteilhafterweise weist das System zumindest zwei Drucksensoren auf, wobei der eine dieser Sensoren den Druck am Strömungseingang bestimmt bzw. messtechnisch erfasst und/oder der andere Sensor den Druck am Strömungsausgang. Diese beiden Sensoren können daher entsprechend als Strömungseingangssensor bzw. als Strömungsausgangssensor bzw. als Strömungseingangsdrucksensor und als Strömungsausgangsdrucksensor bezeichnet werden. Vorteilhafterweise sind dabei diese beiden Sensoren oder sämtliche Sensoren, insbesondere Drucksensoren, des Reifenbefüllungssystems mit der Steuereinheit verbunden. Die Steuereinheit ist derart ausgebildet und/oder ausgelegt, sodass diese das Ventil bzw. das schaltbare Ventil bzw. die Ventile bzw. die schaltbaren Ventile in Abhängigkeit von dem erfassten Druck öffnet und/oder schaltet und/oder schließt. Zweckmäßigerweise ist dabei das Ventil, welches auch als schaltbares Ventil bezeichnet werden kann, derart angeordnet in dem Reifenbefüllungssystem, sodass bei einem geöffneten Ventil ein Luftstrom direkt oder indirekt von dem Strömungseingang zum Strömungsausgang durch das Ventil strömen kann (geöffnete Stellung) und/oder wobei bei einer anderweitigen Schaltstellung das Ventil kein Luftstrom von dem Strömungseingang zu dem Strömungsausgang zulässt bzw. durch das Ventil strömen kann (geschlossene Stellung). Das schaltbare Ventil kann derart in dem Reifenbefüllungssystem angeordnet sein und/oder ausgelegt sein, sodass die Schaltstellung des Ventils entscheidet, ob ein direkter und/oder indirekter Luftstrom von dem Strömungseingang zum Strömungsausgang und/oder ein Luftstrom aus dem Strömungsausgang zu dem zu befüllenden Reifen oder den zu befüllenden Reifen strömen kann. Durch die Verwendung eines Drucksensors einer Steuereinheit und einem schaltbaren Ventil kann dabei erreicht werden, dass insbesondere der in dem Reifen vorliegende Solldruck variabel eingestellt werden kann, denn durch die Steuereinheit kann in einfacher Weise auf den Schwellwert, welcher zum Öffnen oder Schließen des Ventils überschreiten und/oder zu unterschreiten ist, eingestellt werden. Zweckmäßigerweise ist das Ventil bzw. das schaltbare Ventil des Reifenbefüllungssystems derart ausgebildet, dass dieses einen elektrischen Anschluss aufweist und/oder durch magnetische Kräfte geschaltet wird bzw. schaltbar ist. Hierdurch kann eine besonders kompakte und eine einfache Ansteuerungsmöglichkeit bzw. Schaltmöglichkeit des schaltbaren Ventils geschaffen werden.

Vorteilhafterweise sind alle Drucksensoren, welche mit der Steuereinheit verbunden sind, zwischen dem Strömungseingang und dem Strömungsausgang angeordnet. In anderen Worten können alle Drucksensoren, welche Informationen an die Steuereinheit übermitteln können, derart beschaffen sein, dass diese Drücke lediglich zwischen dem Strömungseingang und dem Strömungsausgang bestimmen können. Daher ist die Steuereinheit insbesondere nicht mit einem Drucksensor oder mit Drucksensoren (informationstechnisch) verbunden, welche den Druck in einem Reifen oder der Luftfeder oder dem Federsystem des Fahrzeugs messen können bzw. messtechnisch erfassen können.

Vorteilhafterweise weist die Steuereinheit einen Informationsausgang auf, wobei die Steuereinheit dazu ausgelegt ist, ein Signal, insbesondere ein Warnungssignal, an dem Informationsausgang auszugeben, wenn der durch den oder einen Drucksensor des Reifenbefüllungssystems festgestellte Wert oder dessen zeitliche Ableitung über einem Schwellwert und/oder unter einem Schwellwert liegt. Das Warnungssignal kann auch als Warnsignal bezeichnet werden. Der Informationsausgang der Steuereinheit kann dabei insbesondere mit einem Bussystem und/oder einem anderen Informationssystem des Fahrzeugs verbunden sein oder verbindbar sein. Das ausgegebene Warnsignal kann daher insbesondere dazu genutzt werden, eine Warnleuchte und/oder ein akustisches oder haptisches Signal für einen Betreiber des Nutzfahrzeugs und/oder des Fahrzeugs, in welchem das Reifenbefüllungssystem montiert ist, auszugeben. Durch die Ausbildung des Reifenbefüllungssystems dahingehend, dass dieses an dem Informationsausgang ein Warnsignal ausgibt, wenn der in dem Reifenbefüllungssystem festgestellte Wert des Drucks am Strömungseingang oder -ausgang und/oder dessen zeitliche Ableitung über und/oder unter einem Schwellwert liegt, kann in besonders einfacher Weise der Nutzer des Fahrzeugs dahingehend informiert werden, dass in dem Reifen ein Überdruck, ein Unterdruck und/oder eine Leckage und/oder eine mangelnde Betriebsbereitschaft vorliegt. Die Leckage kann dabei insbesondere durch die zeitliche Ableitung des Druckes ermittelt werden. Der Überdruck und der Unterdruck im System und/oder im Reifen kann hingegen durch eine "absolute" Druckmessung in einfacher Weise erkannt werden. Darüber hinaus kann durch die zeitliche Ableitung des erfassten Druckwerts, insbesondere am Strömungseingang und/oder am Strömungsausgang, erkannt werden, ob beispielsweise ein ordnungsgemäßes Betreiben einer Drucksteigerungseinheit vorliegt. In anderen Worten kann durch den Drucksensor die Schwankung des Druckes ermittelt werden, welche ein eindeutiges Indiz im Hinblick auf beispielsweise einen Pumpzyklus einer Pumpe ist und/oder die Öffnungszeit des schaltbaren Ventils in Bezug zu einer Druckänderung sollte ggf. keine Pumpe vorhanden sein oder eine Pumpe bzw. eine Drucksteigerungseinheit umgangen werden, wobei darüber hinaus oder alternativ ein langfristiger zeitlicher Wert des Drucks erfasst wird und dessen zeitliche Ableitung, sodass festgestellt werden kann, ob der langfristige, insbesondere über 2-40 Sekunden gemittelte (gleitender Mittelwert), vorliegende Anstieg des Luftdrucks zu den gezählten Pumpzyklen passend ist. Sollte jedoch der Druckanstieg nicht mit der Anzahl der Pumpzyklen korrespondieren, so kann die Steuereinheit in einfacher Weise feststellen, dass eine Fehlfunktion im Reifenbefüllungssystem und/oder im Reifen und/oder im Druckversorgungssystem bzw. am Strömungseingang vorliegt. Hierdurch kann das Reifenbefüllungssystem und dessen Steuereinheit in vielfältiger Weise dazu genutzt werden, eine Fehlfunktion des Reifenbefüllungssystems und/oder seiner umliegenden Komponenten (Reifen und Druckluftsystem) festzustellen und/oder den Fahrer über eine derartige Fehlfunktion zu informieren, insbesondere über den Informationsausgang. Der Informationsausgang kann dabei mit einer Telematik verbunden sein. Die Telematik kann dabei dazu genutzt werden, eine entfernte Person zu informieren. Eine Entfernte Person ist dabei eine Person, welche mehr als 100 Meter, bevorzugt mehr als 1000 Meter und besonders bevorzugt mehr als 10 Kilometer, von der Telematik entfernt ist. Insbesondere kann die entfernte Person dabei eine Fleetmanager oder ein (Fleetmanager-)Server sein.

Erfindungsgemäß ist die Steuereinheit eine elektronische Steuer- und/oder Kontrolleinheit. Eine derartige elektronische Steuer- und/oder Kontrolleinheit kann auch als ECU bezeichnet werden und/oder als eine solche ausgebildet sein. Durch das Vorsehen der Steuereinheit dahingehend, dass diese eine elektronische Steuer-und/oder Kontrolleinheit ist, kann in besonders einfacher Weise eine Schnittstelle für ein Bussystem eines Fahrzeugs realisiert werden. Darüber hinaus sind derartige Steuereinheiten auch besonders kostengünstig.

Zweckmäßigerweise ist das Ventil, welches insbesondere ein schaltbares Ventil ist oder als solches bezeichnet werden kann, ein Magnetventil. Hierdurch kann eine besonders einfache und schnelle Schaltung des Ventils bzw. des schaltbaren Ventils erreicht werden.

Vorteilhafterweise ist das Reifenbefüllungssystem derart ausgelegt, dass der Druck am Strömungsausgang bei einem geöffneten Ventil größer ist als am Strömungseingang. **In** anderen Worten kann durch das Reifenbefüllungssystem eine Druckerhöhung zwischen dem Strömungseingang und dem Strömungsausgang realisiert werden. Eine derartige Druckerhöhung kann dabei nicht nur bei einem geöffneten Ventil vorliegen sondern auch bei einem geschlossenen Ventil. Vorteilhafterweise liegt jedoch zumindest bei einem geöffneten Ventil, in einem ordnungsgemäßen Zustand, ein höherer Druck am Strömungsausgang an, als am Strömungseingang. Eine derartige Druckerhöhung zwischen dem Strömungseingang und dem Strömungsausgang kann insbesondere durch eine Drucksteigerungseinheit erreicht werden.

Zweckmäßigerweise weist das Reifenbefüllungssystem eine Drucksteigerungseinheit auf, wobei die Drucksteigerungseinheit insbesondere ein Druckerhöher ist. Alternativ bevorzugt kann die Drucksteigerungseinheit auch eine Pumpe, eine Druckwaage, eine Druckwippe, eine Schlauchpumpe, einen Turbolader und/oder eine Turbine sein. Durch das Vorsehen einer Drucksteigerungseinheit kann in einfacher und effektiver Weise am Strömungsausgang ein höherer Druck erzielt werden als am Strömungseingang. **In** anderen Worten kann daher eine Drucksteigerungseinheit dazu verwendet werden, einen Druck innerhalb des Reifenbefüllungssystems zu steigern, sodass als Befüllungssystem des Reifenbefüllungssystems auch ein Niederdruck(luft)system, insbesondere ein Luftfedersystem, des Fahrzeugs genutzt werden kann, und dennoch ein ausreichend hoher Druck am Strömungsausgang vorliegen kann. Die Drucksteigerungseinheit kann insbesondere mit der Steuereinheit verbunden sein, sodass die Steuereinheit die Drucksteigerungseinheit steuern und/oder regeln kann. **In** anderen Worten kann die Steuereinheit gezielt Eingriff auf den (Betriebs-)Zustand der Drucksteigerungseinheit nehmen. Sollte die Drucksteigerungseinheit ein Druckerhöher sein, so kann hierdurch ein besonders kompaktes System erreicht werden, welches keine externen Anschlüsse benötigt, sodass ein besonders autonomes System hierdurch erreicht werden kann. Sollte die Drucksteigerungseinheit hingegen eine Pumpe sein, so kann hierdurch eine besonders kostengünstige und einfache Konstruktion der Drucksteigerungseinheit erreicht werden. Besonders bevorzugt ist die Drucksteigerungseinheit eine Schlauchpumpe, denn hierdurch kann insbesondere eine Kontamination der Luft mit Schmierstoffen vermieden werden, sodass insbesondere ein Zusetzen der Reifenventile der zu befüllenden Reifen durch Schmierstoffe verhindert werden kann. Vorteilhafterweise kann die Drucksteigerungseinheit ein Turbolader sein und/oder eine Turbine. Durch ein Turbolader und/oder eine Turbine kann ein kontinuierlicher offener Förderprozess erreicht werden, sodass insbesondere eine nahezu unterbrechungsfreie Befüllung des Reifens oder der Reifen erfolgen kann. Vorteilhafterweise ist der Turbolader dabei durch das Druckluftsystem gespeist, welches auch den Strömungseingang speist. Sollte die Drucksteigerungseinheit eine Druckwippe sein, so kann hierdurch eine weitere kostengünstige alternative Ausgestaltung der Drucksteigerungseinheit erreicht werden.

Bevorzugt weist die Drucksteigerungseinheit einen Energieanschluss auf, wobei durch den Energieanschluss die zur Drucksteigerung benötigte Energie in die Drucksteigerungseinheit gelangt oder gelangen kann. Vorteilhafterweise ist der Energieanschluss der Drucksteigerungseinheit mit dem Strömungseingang verbunden. In anderen Worten wird die Drucksteigerungseinheit mit Energie über den Strömungseingang versorgt.

Erfindungsgemäß liegt die Drucksteigerungsfähigkeit bzw. das Drucksteigerungsverhältnis der Drucksteigerungseinheit in einem Bereich von 1,2 bis 1,8. Die Drucksteigerungsfähigkeit bzw. das Drucksteigerungsverhältnis bezeichnet das Verhältnis zwischen dem Eingangs- und dem Ausgangsdruck der Drucksteigerungseinheit bzw. zwischen dem Druck am Strömungseingang und dem Strömungsausgang. Alternativ oder zusätzlich bevorzugt kann das Verhältnis insbesondere auch das Verhältnis zwischen dem Druck am Ausgang der Drucksteigerungseinheit zu dem Druck am Eingang der Drucksteigerungseinheit bezeichnen. Bei einem Verhältnis von 1.05 bis 2,6 kann eine besonders gute Einsatzbreite erreicht werden, wobei jedoch gleichzeitig eine Überbelastung des Systems verhindert werden kann. Sollte das Verhältnis in einem Bereich von 1,1 bis 2,0 liegen, so kann hierdurch eine besonders gute Ausnutzung der Energie erreicht werden bzw. ein besonders hoher Wirkungsgrad erreicht werden.

Erfindungsgemäß weist die Drucksteigerungseinheit, welche insbesondere ein Druckerhöher sein kann, einen oder zwei Doppelkolben oder doppeltwirkende Zylinder oder Kolben auf. Hierdurch kann eine besonders kompakte Ausgestaltung erreicht werden. Vorteilhafterweise sind die beiden doppeltwirkenden Kolben bzw. Zylinder, insbesondere durch eine Kolbenstange, miteinander mechanisch verbunden. Hierdurch resultiert eine besonders kompakte Kraftübertragung zwischen den Kolben. Unter einem mechanischen Verbinden ist insbesondere zu verstehen, dass die beiden Elemente nicht voneinander separiert oder diese relativ zueinander verschoben werden können.

Vorteilhafterweise weist die Drucksteigerungseinheit einen Auslass und/oder eine Entlüftung auf, wobei der Auslass bzw. die Entlüftung die Drucksteigerungseinheit mit der Umgebung, insbesondere unmittelbar, verbindet. Hierdurch kann in einfacher Weise eine Entlüftung der Drucksteigerungseinheit erfolgen. Vorteilhafterweise ist in oder an dem Auslass oder der Entlüftung ein Schalldämpfer angeordnet, um die Geräuschbelästigung der Umgebung zu reduzieren. Neben einer unmittelbaren Verbindung kann auch das oder eines der schaltbaren Ventile in der Entlüftung angeordnet sein.

Bevorzugt weist die Drucksteigerungseinheit, welche insbesondere ein Druckerhöher sein kann, ein Gehäuse auf, wobei das Gehäuse aus einer Aluminiumlegierung und/oder aus einem faserverstärkten Kunststoff ausgebildet ist oder zumindest teilweise ausgebildet ist. Das Gehäuse dient dazu, die Drucksteigerungseinheit gegen äußere Einflüsse zu schützen. Die Verwendung von Aluminium und/oder faserverstärktem Kunststoff mündet in einer besonders leichten Einheit, was gerade bei Nutzfahrzeugen zu einer Steigerung der Nutzlast führt.

In einer vorteilhaften Ausführungsform ist der Strömungseingang direkt oder indirekt mit einem Eingang der Drucksteigerungseinheit verbunden und/oder wobei ein Ausgang der Drucksteigerungseinheit mit dem Strömungsausgang direkt oder indirekt verbunden ist. Unter einem direkten Verbinden ist insbesondere zu verstehen, dass Leitungen direkten von einem Element zum anderen Element geführt sind, insbesondere ohne dass zwischen diesen ein Ventil und/oder eine Pumpe oder andere Elemente angeordnet sind. Bei einen direkten Verbinden können jedoch Strömungsweggabelungen oder gar Ventile, insbesondere ausschließlich das schaltbare Ventil, vorgesehen sein, ohne eine "direkte" Verbindung zu zerstören. Unter einem indirekten Verbinden ist dabei insbesondere zu verstehen, dass zwischen den beiden maßgeblichen Punkten, welche verbunden werden sollen, nicht nur Strömungsgabelungen vorliegen können sondern auch andere Elemente, wie z.B. eine Drucksteigerungseinheiten und/oder Ventile oder weitere strömungsmechanische Elemente. Durch das Verbinden des Strömungseingangs mit dem Eingang der Drucksteigerungseinheit kann in einfacher Weise der bereits vorliegende Druck am Strömungseingang genutzt werden, sodass die Drucksteigerungseinheit weniger Arbeit zu leisten hat. Durch das Verbinden eines Ausgangs der Drucksteigerungseinheit mit dem Strömungsausgang kann in besonders einfacher Weise das durch die Drucksteigerungseinheit geförderte Fluid, insbesondere die Druckluft, zur Reifenbefüllung genutzt werden.

In einer zusätzlich oder alternativ bevorzugten Ausführungsform weist die Drucksteigerungseinheit zumindest ein, bevorzugt zwei oder eine Vielzahl von Verdrängerelement/en, insbesondere Kolben in einem Zylinderkopf, vorteilhafterweise in einem doppelt wirkenden Zylinder, auf. Verdrängerelemente im Rahmen der Erfindung sind insbesondere diejenigen Elemente, welche innerhalb der Drucksteigerungseinheit verlagert werden, und/oder rotiert werden, um so eine Volumenverschiebung und/oder Veränderung in dem Förderraum der Drucksteigerungseinheit zu erreichen und/oder eine Förderung des Förderfluids, insbesondere Druckluft, zu erreichen. Beispielsweise können daher Kolben, Turbinenschaufeln und/oder veränderbare Schlauchvolumina als Verdrängerelemente im Sinne der Erfindung bezeichnet werden. Durch das Vorsehen von Verdrängerelementen kann in besonders einfacher Weise eine Drucksteigerung durch die Drucksteigerungseinheit erreicht werden. Besonders bevorzugt ist die Drucksteigerungseinheit eine hydrostatische Einheit. In anderen Worten kann die Drucksteigerungseinheit derart ausgebildet sein, dass diese die Drucksteigerung durch einen geschlossenen thermodynamischen Prozess erreicht. Vorteilhafterweise weist die Drucksteigerungseinheit ein oder mehrere Verdrängerelemente in Form eines oder mehrerer doppelwirkenden/r Zylinder auf. Zweckmäßigerweise sind dabei zwei dieser doppelt wirkenden Zylinder auf der gleichen Kolbenstange gehalten und/oder angeordnet und/oder durch eine Wirkverbindung miteinander verbunden, sodass die Bewegung des einen doppelwirkenden Zylinders automatisch eine Bewegung des anderen doppelwirkenden Zylinders verursacht oder bedingt. Hierdurch kann in besonders bauraumsparender Weise eine Drucksteigerungseinheit, insbesondere in Form eines Druckerhöhers, erreicht werden.

In einer vorteilhaften Ausführungsform weist die Drucksteigerungseinheit ein Linearmotor auf oder ist mit einem Linearmotor verbunden. Durch die Verwendung eines Linearmotors kann eine besonders gute und kompakte Antriebsmöglichkeit des oder der Verdrängerelements/e und/oder eines Kolbens der Drucksteigerungseinheit erreicht werden. Darüber hinaus kann durch einen Linearmotor auch gezielt das Hub- bzw. das Verdrängungsvolumen der Drucksteigerungseinheit eingestellt und/oder bestimmt werden.

In einer vorteilhaften Ausführungsform weist die Drucksteigerungseinheit eine Magnetkraftquelle, insbesondere einen Elektromagneten, auf, wobei die von der Magnetkraftquelle induzierten magnetischen Kräfte direkt oder indirekt an einem oder dem Verdrängerelement der Drucksteigerungseinheit angreifen, und vorteilhafterweise diese in seiner räumlichen Lage verändern können. In anderen Worten kann die Drucksteigerungseinheit ein Element aufweisen, welches magnetische Kräfte imitiert bzw. induzieren kann, wobei der Gegenpart zu dieser Magnetkraftquelle direkt oder indirekt mit einem Verdrängerelement der Drucksteigerungseinheit verbunden ist, sodass die von der Magnetkraftquelle initiierten Kräfte eine Veränderung der räumlichen Lage des Verdrängerelements der Drucksteigerungseinheit bewerkstelligen können. Beispielsweise kann die Magnetkraftquelle "ähnlich" einem Stator eines Elektromotors ausgebildet sein und das Verdrängerelement ähnlich einem Rotor eines Elektromotors. Daher ist es besonders zweckmäßig, um eine geringe Baugröße der Drucksteigerungseinheit zu erhalten, wenn die von der Magnetkraftquelle induzierten magnetischen Kräfte direkt an dem Verdrängerelement der Drucksteigerungseinheit, insbesondere einem Kolben oder einer Kolbenstange, der Drucksteigerungseinheit angreifen. Durch eine derartige Ausbildung der Betätigung der Verdrängerelemente bzw. des Antriebs der Verdrängerelemente kann ein Wirkprinzip ähnlich einer "Railgun" erreicht werden, wobei das "Geschoss" das Verdrängerelement sein kann bzw. dessen Äquivalent bildet.

Vorteilhafterweise weist das Reifenbefüllungssystem einen Druckeingangssensor auf, wobei der Druckeingangssensor in der Lage ist, einen Druck am Strömungseingang zu erfassen. Beispielsweise kann das Reifenbefüllungssystem einen weiteren Drucksensor aufweisen, welcher in der Lage ist, den Druck am Eingang des Reifenbefüllungssystems festzustellen. Durch einen derartigen Druckeingangssensor ist das Reifenbefüllungssystem in der Lage, die pneumatische Betriebsbereitschaft des Reifenbefüllungssystems zu erfassen. **In** anderen Worten kann durch den Druckeingangssensor leicht festgestellt werden, wenn kein ausreichender Luftdruck am Strömungseingang vorliegt, um das Reifenbefüllungssystem zu betreiben. Der Druckeingangssensor ist vorteilhafterweise mit der Steuereinheit des Reifenbefüllungssystems verbunden, sodass die Steuereinheit mit dem vom Druckeingangssensor erfassten Wert gefüttert bzw. gespeist werden kann. Vorteilhafterweise ist das schaltbare Ventil ein 2/2 Wegeventil. Alternativ oder zusätzlich bevorzugt ist das oder eines der schaltbaren Ventile ein 3/2 Wegeventil oder ein 4/2 Wegeventil. Durch das Vorsehen von nur zwei Schaltstellungen des schaltbaren Ventils kann das Ventil relativ schnell und auch zuverlässig geschaltet werden, sodass hierdurch die Sicherheit des Reifenbefüllungssystems gesteigert werden kann.

Sollte das schaltbare Ventil eins 2/2 Wegeventil sein, so kann hierdurch ein besonders kompaktes Ventil erreicht werden, sodass wertvoller Bauraum gespart werden kann.

Sollte das Schaltventil ein 3/2 Wegeventil sein, so kann auf diese Weise in besonders einfacher Ausgestaltung eine gezielte Luftströmung vom Strömungseingang zum Strömungsausgang auf unterschiedlichen Wegen erreicht werden. Beispielsweise kann das Reifenbefüllungssystem derart ausgebildet sein, dass einer der Anschlüsse des 3/2 Wegeventils mit dem Strömungseingang und andere Anschlüsse wahlweise bzw. schaltbar mit einer Verbindungsleitung und/oder mit der Drucksteigerungseinheit verbunden sind. Hierdurch kann schnell und selektiv die Art der Druckbefüllung des Reifens an den vorhandenen Druck im Strömungseingang angepasst werden. Insbesondere kann daher durch eine derartige Ausbildung das Reifenbefüllungssystem selektiv entscheiden, ob direkt eine Luftströmung zwischen dem Strömungseingang und dem Strömungsausgang etabliert werden soll - beispielsweise über eine Verbindungsleitung - oder ob die vom Strömungseingang zum Strömungsausgang fließende (Druck-)Luft durch die Drucksteigerungseinheit fließen soll. Durch die Umgehung der Drucksteigerungseinheit kann eine besonders schnelle und einfache Befüllung erfolgen, wobei diese insbesondere dann genutzt werden sollte, wenn der Druck am Strömungsausgang kleiner ist als der Druck am Strömungseingang und/oder wenn der benötigte Druck gering ist, wie es z.B. bei Zwillingsreifen der Fall sein kann.

Sollte ein 4/2 Wegeventil verwendet werden, kann insbesondere erreicht werden, dass der Drucksensor, insbesondere der Druckeingangssensor, wahlweise mit der Umgebung oder dem Strömungseingang verbunden sein kann und zeitgleich die Drucksteigerungseinheit mit dem Strömungseingang oder mit der Umgebung verbunden sein kann. Durch die wahlweise Schaltung des Drucksensors derart, dass dieser entweder mit dem Strömungseingang oder mit der Umgebung verbunden ist, kann der Drucksensor, insbesondere der Strömungseingangssensor, dazu benutzt werden ein "Kleben" des schaltbaren Ventils festzustellen. Hierdurch kann der Drucksensor daher in anderen Worten dazu genutzt werden, die korrekte Funktion des schaltbaren Ventils zu überwachen. Durch die selektive Unterscheidbarkeit bzw. Verbindbarkeit der Drucksteigerungseinheit mit dem Strömungseingang oder der Umgebung kann erreicht werden, dass auch bei einer Fehlfunktion des druckversorgenden Systems, insbesondere des Luftfedersystems, oder eines Verstopfens des Strömungseingangs weiterhin eine Funktionsfähigkeit des Reifenbefüllungssystems gegeben ist, denn anstatt des Strömungseingangs wird daher Umgebungsluft verwendet, um den Reifen zu befüllen.

Zweckmäßigerweise ist/sind der Drucksensor und/oder die Drucksensoren, insbesondere der Druckeingangssensor und/oder der Druckausgangssensor, auf einer Platine der Steuereinheit angeordnet. Hierdurch kann eine besonders kompakte Steuer-Sensoreinheit erreicht werden, welche aufgrund dieser Kompaktheit einfach montiert werden kann und nur geringe Lagerkosten während des Herstellungsprozesses verursacht und es kann auch noch wertvoller Bauraum gespart werden.

Zweckmäßigerweise weist das Reifenbefüllungssystem eine Verbindungsleitung auf, wobei die Verbindungsleitung direkt den Strömungseingang, insbesondere ausschließlich über das Ventil, mit dem Strömungsausgang verbindet. In anderen Worten kann das Reifenbefüllungssystem derart ausgebildet sein, dass ein Luftstrom von dem Strömungseingang über die Verbindungsleitung und durch das Ventil bzw. durch das schaltbare Ventil und durch die Verbindungsleitung den Strömungseingang direkt mit dem Strömungsausgang verbindet. Hierdurch kann eine direkte Zufuhr von Luft von dem Strömungseingang in den Reifen erreicht werden, insbesondere ohne das Führen der Luftströmung durch die bzw. eine Drucksteigerungseinheit des Reifenbefüllungssystems. Dies ist insbesondere dann vorteilhaft, wenn ein niedriger Reifendruck schnell durch das Reifenbefüllungssystem eliminiert werden soll und/oder wenn das Reifenbefüllungssystem bzw. der Strömungsausgang strömungstechnisch mit einem Zwillingsreifen verbunden ist. Darüber hinaus kann durch eine derartige Ausgestaltung - gerade bei einem niedrigen Reifendruck- die Befüllungsdauer und/oder der Energiebedarf des Reifenbefüllungssystems verringert werden.

Zweckmäßigerweise weist das Reifenbefüllungssystem ein Ablassventil auf, wobei das Ablassventil in einer seiner Schaltstellungen den Strömungsausgang strömungstechnisch, insbesondere direkt, mit der Umgebung verbindet oder verbinden kann. Daher kann das Ablassventil dazu dienen, insbesondere den Strömungsausgang, direkt mit der Umgebung zu verbinden, um so den Druck innerhalb des Reifenbefüllungssystems, insbesondere am Strömungsausgang, zu reduzieren. Das Ablassventil kann dabei mit der Steuereinheit verbunden sein und/oder ein selbstschaltendes Ventil sein. Der Vorteil eines selbstschaltenden Ventils liegt darin, dass ein zusätzliches Sicherheitssystem geschaffen wird. Der Vorteil eines durch die Steuereinheit schaltbaren Ablassventils liegt darin, dass durch ein derartiges Ablassventil gezielt durch die Steuereinheit der Reifendruck des Reifen reduziert werden kann. Eine derartige Maßnahme kann beispielsweise bei einer starken Aufwärmung des Reifens, einer Änderung des Belags der Fahrstrecke und/oder einem unbeabsichtigten Überfüllen des Reifens mit Druckluft notwendig und/oder bevorzugt sein.

In einer vorteilhaften Ausführungsform ist das Ablassventil durch die Steuereinheit schaltbar. Durch eine derartige Ausgestaltung kann eine besonders einfache Möglichkeit geschaffen werden, gezielt den Druck in den Reifen zu reduzieren, insbesondere auf einen frei wählbaren Wert.

Zweckmäßigerweise ist/sind zwischen dem Strömungseingang und dem schaltbaren Ventil ein Rückschlagventil und/oder ein Überströmventil ohne Rückströmung angeordnet. Unter einem zwischen ist dabei zu verstehen, dass "in" einem Strömungsweg zwischen dem Strömungseingang und dem schaltbaren Ventil ein Rückschlagventil und/oder ein Überströmventil vorgesehen sein kann. Daher ist die Begrifflichkeit "zwischen" in einem Strömungssinne zu verstehen. Vorteilhafterweise kann durch das Rückströmventil verhindert werden, dass ein Luftstrom bzw. Druckluftstrom aus dem Reifenbefüllungssystem in das Speisungssystem, insbesondere das Druckluftsystem des speisenden Fahrzeugs bzw. Nutzfahrzeugs, stattfinden kann. Hierdurch kann insbesondere ein Druckverlust verhindert werden. Das Überströmventil dient dabei dazu, sicherzustellen, dass ein gewisser minimaler Befüllungsdruck am Strömungseingang vorliegt. Zweckmäßigerweise sind sowohl ein Rückschlagventil als auch ein Überströmventil ohne Rückströmung vorgesehen, denn durch diese doppelte Anordnung beider Ventilarten kann ein besonders sicheres und effizientes Reifenbefüllungssystem erreicht werden.

Vorteilhafterweise weist das Reifenbefüllungssystem einen Temperatursensor auf, mittels welchem die Umgebungstemperatur oder die Drucklufttemperatur im Reifenbefüllungssystem ermittelt werden kann, insbesondere am Strömungseingang. Vorteilhafterweise kann das Reifenbefüllungssystem eine Vielzahl von Temperatursensoren aufweisen.

Bevorzugt liegt zwischen dem Strömungseingang und der Drucksteigerungseinheit, insbesondere dem Eingang der Drucksteigerungseinheit, nur ein schaltbares Ventil. Hierdurch kann der Druckverlust gering gehalten werden, sodass ein besonders energieeffizientes System resultiert.

Bevorzugt liegt zwischen der Drucksteigerungseinheit, insbesondere dem Ausgang der Drucksteigerungseinheit, und dem Strömungsausgang nur ein schaltbares Ventil. Hierdurch kann der Druckverlust gering gehalten werden, sodass ein besonders energieeffizientes System resultiert.

Vorteilhafterweise verbindet oder trennt das schaltbare Ventil strömungstechnisch den Eingang der Drucksteigerungseinheit von dem Strömungseingang. In anderen Worten kann das oder eines der schaltbaren Ventile den Strömungseingang mit der Drucksteigerungseinheit, insbesondere dem Eingang der Drucksteigerungseinheit, strömungstechnisch in einer Schaltstellung verbinden und in der anderen Schaltstellung trennen. Hierdurch kann ein besonders kompaktes System erreicht werden.

Vorteilhafterweise verbindet oder trennt das schaltbare Ventil strömungstechnisch den Ausgang der Drucksteigerungseinheit von dem Strömungsausgang. In anderen Worten kann das oder eines der schaltbaren Ventile den Strömungsausgang mit dem Ausgang der Drucksteigerungseinheit - oder allgemein die Drucksteigerungseinheit strömungstechnisch - in einer Schaltstellung verbinden und in der anderen Schaltstellung trennen. Hierdurch kann ein besonders kompaktes System erreicht werden.

Ein weiterer Aspekt der Erfindung kann ein Nutzfahrzeug betreffen, welches ein Reifenbefüllungssystem wie vorgehend und nachfolgend umfasst. Vorteilhafterweise ist der Strömungseingang des Reifenbefüllungssystems mit einem Druckluftsystem des Nutzfahrzeugs, insbesondere mit einem Druckluftsystem einer Luftfeder des Nutzfahrzeugs, verbunden oder verbindbar und/oder wobei der Strömungsausgang des Reifenbefüllungssystems vorteilhafter Weise mit einem Druckraum eines Reifens des Nutzfahrzeugs verbunden ist oder verbindbar ist. In anderen Worten kann das Reifenbefüllungssystem derart in dem Nutzfahrzeug angeordnet sein, sodass Druckluft aus einem Druckluftsystem des Nutzfahrzeugs über den Strömungseingang des Reifenbefüllungssystems in den Fluidinnenraum bzw. die Strömungsleitungen und die Druckluft aufnehmenden Strukturen des Reifenbefüllungssystems strömen kann und/oder aus diesen Volumen bzw. druckluftaufnehmenden Volumina des Reifenbefüllungssystems über den Strömungsausgang des Reifenbefüllungssystems in den Druckraum eines Reifens des Nutzfahrzeug strömen bzw. gefördert werden kann. Vorteilhafterweise sind dabei sämtliche Reifen, insbesondere tragende Reifen, des Nutzfahrzeugs mit dem Strömungsausgang strömungstechnisch verbunden. Beispielsweise können daher sämtliche Reifen des Nutzfahrzeugs mit dem Reifenbefüllungssystem befüllbar sein. Unter den tragenden Reifen des Nutzfahrzeugs sind insbesondere diejenigen Reifen zu verstehen, welche die Achsen des Nutzfahrzeugs abstützen. Die Achsen sind dabei insbesondere diejenigen Achsen, welche das Nutzfahrzeug gegenüber der Straße bei einer Fahrt des Fahrzeugs abstützen und/oder tragen. Diese Reifen des Nutzfahrzeug können insbesondere Zwillingsreifen sein und/oder Einzelreifen.

Ein weiterer Aspekt der Erfindung kann ein Verfahren zum Betreiben eines Reifenbefüllungssystems, insbesondere wie vorgehend und nachfolgend beschrieben, betreffen. Zweckmäßigerweise umfasst dieses Verfahren dabei die Schritte:
- Bestimmen des Drucks an einem Strömungsausgang des Reifenbefüllungssystems;
- vorteilhafterweise Übermitteln des bestimmten Druckwerts an eine Steuereinheit;
- Vergleichen des ermittelten Drucks mit einem Solldruck durch die Steuereinheit;
- Insbesondere betätigen einer Drucksteigerungseinheit des Reifenbefüllungssystem, insbesondere durch die Steuereinheit, wenn der Druck unter den Solldruck bzw. einen Schwellenwert liegt.

Durch das erfindungsgemäße Verfahren kann in besonders einfacher Weise sichergestellt werden, dass bei einem Absinken des Drucks in dem Reifen erneut eine Befüllung bzw. eine Drucksteigerung des Reifens erreicht werden kann. Vorteilhafterweise ist der Solldruck eine feste Größe. In anderen Worten ist diese Größe gerade nicht variabel. Insbesondere wird daher gerade nicht der Reifendruck in dem Verfahren gemessen, sondern nur der Druck am Strömungsausgang. Alternativ oder zusätzlich zum Strömungsausgang kann auch der Druck am Strömungseingang gemessen werden.

In einer vorteilhaften Ausführungsform des Verfahrens umfasst dieses die Schritte:
- Bestimmen des geförderten Volumenstroms einer Drucksteigerungseinheit, insbesondere des Reifenbefüllungssystems;
- Bestimmen der Zunahme des Drucks an dem Strömungsausgang des Reifenbefüllungssystems;
- Ermitteln, ob die Druckzunahme geringer ist als die zu erwartende Druckzunahme, insbesondere aufgrund des Volumens und/oder des Volumens der zu befüllenden Reifen und/oder des Volumens des Reifenbefüllungssystems.

Durch das Ermitteln des geförderten Volumenstroms, insbesondere durch Zählung von Pumpzyklen, Pumphüben und/oder Umdrehungen und/oder Zylinderhüben beispielsweise der Verdrängerelemente der Drucksteigerungseinheit, und dem Bestimmen der Zunahme des Drucks an dem Strömungsausgang des Reifenbefüllungssystems und dem Vergleich mit einem zu erwartenden Druck kann insbesondere festgestellt werden, ob eine Leckage und/oder ein Austausch des/eines Reifens und/oder des Ventils des Reifens benötigt wird. Die zu erwartende Druckzunahme kann in einfacher Weise durch die Kenntnisse des bereitgestellten Volumens des Reifenbefüllungssystems und/oder des Reifens und durch Verwendung einfacher thermodynamischer Gesetze bestimmt werden. Zweckmäßigerweise kann diese zu erwartende Druckzunahme oder das Ermitteln des geförderten Volumenstroms dabei durch die Steuereinheit des Reifenbefüllungssystems ermittelt werden.

In einer weiteren alternativen oder zusätzlich bevorzugten Ausführungsvariante des Verfahrens zum Betreiben eines Reifenbefüllungssystems, insbesondere wie vorgehend und nachfolgend beschrieben, umfasst dieses die Schritte:
- Bestimmen der Zeit zwischen zwei aufeinanderfolgenden Pumpzyklen der Drucksteigerungseinheit;
- Vergleichen der Zeit und/oder der Änderung der Zeit zwischen zwei Pumpzyklen, wobei bei Überschreiten eines Schwellwerts insbesondere eine Warnung durch die Steuereinheit ausgegeben wird. Durch die Bestimmung der Zeiten zwischen zwei aufeinanderfolgenden Pumpzyklen der Drucksteigerungseinheit und dem Vergleich der Änderung und/oder mit einem Solldruck, kann in einfacher Weise bestimmt werden, ob die Drucksteigerungseinheit ordnungsgemäß funktioniert. Insbesondere kann dabei festgestellt werden, dass bei einem zu geringen zeitlichen Abstand zwischen zwei aufeinanderfolgenden Pumpzyklen oder Pumphüben die gewünschte Solldruckdifferenz nicht durch die Drucksteigerungseinheit erreicht werden kann. Unter Pumpzyklen ist insbesondere zu verstehen, dass ein Verdrängerelement der Drucksteigerungseinheit genau eine Laufperiode bzw. eine Umdrehung durchlaufen hat. Unter einer Laufperiode ist insbesondere zu verstehen, dass das Verdrängungselement der Drucksteigerungseinheit eine Position verlassen hat und nach einem Zyklus genau die gleiche Position erneut wieder eingenommen hat.

Das erfindungsgemäße Verfahren kann dabei insbesondere Merkmale aufweisen, die bereits im Rahmen des Reifenbefüllungssystems und/oder des Nutzfahrzeug beschrieben wurden und/oder im Nachfolgenden beschrieben werden. **In** anderen Worten kann das Verfahren zum Betreiben des Reifenbefüllungssystems auch die vorgehend dargelegten Merkmale in Hinblick auf die Vorrichtung(en) aufweisen und in umgekehrter Weise kann die Vorrichtung Merkmale aufweisen, die in Zusammenhang mit dem Verfahren zum Betreiben eines Reifenbefüllungssystems dargelegt wurden. Insbesondere kann dabei die Steuereinheit des Reifenbefüllungssystems derart ausgebildet sein, dass dieses derart ausgelegt und/oder ausgebildet ist, dass diese die verfahrensgemäßen Merkmale realisieren kann, insbesondere in dem vorgehend und nachfolgend beschriebenen Reifenbefüllungssystem.

Weitere Vorteile und Merkmale der vorliegenden Erfindung ergeben sich aus der nachfolgenden Beschreibung mit Bezug auf die Figuren. Einzelne in den gezeigten Ausführungsformen offenbarten Merkmale können auch in anderen Ausführungsformen eingesetzt werden, sofern dies nicht ausdrücklich ausgeschlossen wurde. Es zeigen:
- Figur 1: eine erste Ausgestaltung eines Reifenbefüllungssystems;
- Figur 2: eine zweite Ausgestaltung eines Reifenbefüllungssystems;
- Figur 3: eine dritte Ausgestaltung eines Reifenbefüllungssystems;
- Figur 4: eine vierte Ausgestaltung eines Reifenbefüllungssystem;
- Figur 5: eine fünfte Ausgestaltung eines Reifenbefüllungssystems;
- Figur 6: eine sechste Ausgestaltung eines Reifenbefüllungssystems;
- Figur 7: eine siebte Ausgestaltung eines Reifenbefüllungssystems;
- Figur 8: eine achte Ausgestaltung eines Reifenbefüllungssystems;
- Figur 9: eine neunte Ausgestaltung eines Reifenbefüllungssystems; und
- Figur 10: eine zehnte Ausgestaltung eines Reifenbefüllungssystems;

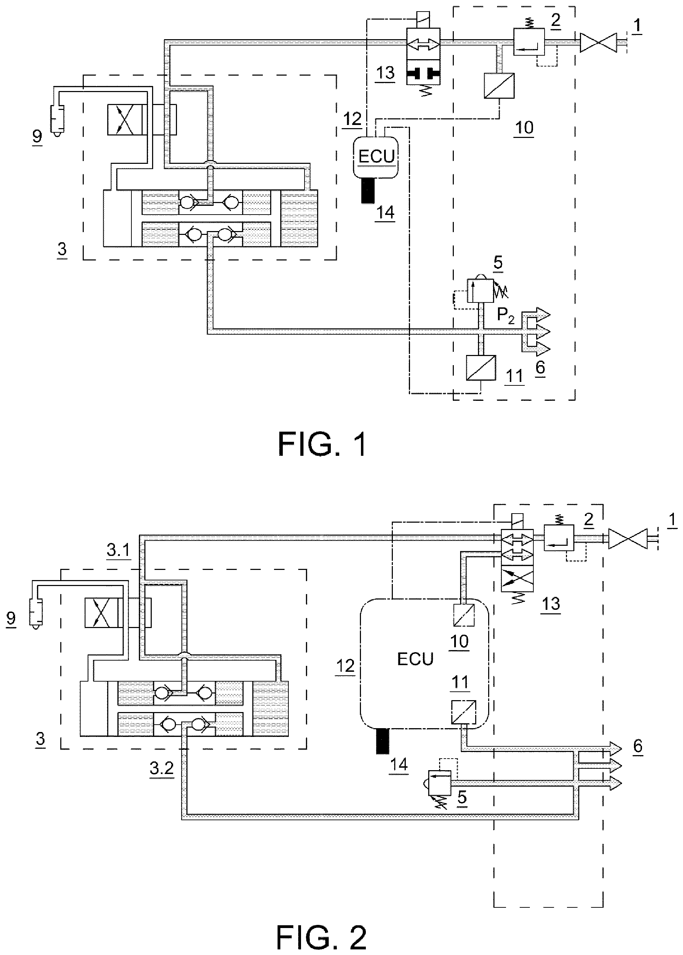

In **Figur** 1 ist ein Reifenbefüllungssystem gezeigt. Das Reifenbefüllungssystem ist über den Strömungseingang 1 mit einem Druckluftsystem eines Nutzfahrzeugs verbunden, wobei es sich bei diesem System um ein Luftfederdruckluftsystem, welches auch als Druckluftsystem einer/der Luftfeder bezeichnet werden kann, des Nutzfahrzeugs handelt. Dieses System kann auch als Befüllungs- oder Speisesystem bezeichnet werden. In Strömungsrichtung hinter dem Strömungseingang 1 ist ein Überströmventil 2 angeordnet. Hinter dem Überströmventil 2 ist eine strömungstechnische Abzweigung vorgesehen, durch die der Drucksensor 11, welcher ein, insbesondere indirekter, Strömungseingangssensor 11 ist, in der Lage ist, den Druck am Strömungseingang 1 zu bestimmen. Weiter stromabwärts liegend befindet sich das schaltbare Ventil 13, welches durch einen Strom und durch einen Elektromagneten schaltbar ist. Das schaltbare Ventil 13 ist mit der Steuereinheit 12 verbunden, sodass die Steuereinheit 12 das schaltbare Ventil 13 in verschiedene Schaltstellungen bringen kann. Die Steuereinheit 12 verfügt über einen Informationsausgang 14. Über diesen Informationsausgang 14 kann die Steuereinheit 12, welche in der Figur eine ECU ist, Informationen an ein Fahrzeugsystem, insbesondere über ein Bussystem, an weitere Steuergeräte eines Fahrzeugs liefern und/oder mit einem Display verbunden sein, um so Fehlermeldung und/oder andere Informationen, insbesondere Druckwerte der Drucksensoren 10,11, für einen Benutzer anzeigen zu können. Neben oder alternativ zu dem Informationsausgang 14 kann die Steuereinheit 12 auch einen Informationseingang aufweisen, durch welchen Informationen an die Steuereinheit 12 überführt werden können. Um eine Drucksteigerung gegenüber dem am Strömungseingang 1 vorliegenden Druck zu erreichen, welcher durch den Strömungseingangssensor 10 ermittelt werden kann, verfügt das Reifenbefüllungssystem über eine Drucksteigerungseinheit 3. In dem vorliegenden Fall weist die Drucksteigerungseinheit 3 zwei doppelwirkende Zylinder auf, welche über eine Kolbenstange miteinander gekoppelt sind. Die Drucksteigerungseinheit 3 verfügt über einen Umgebungsausgang, an welchem ein Geräuschdämpfer 9 angeordnet ist. Über diesen Umgebungsausgang kann ein Fluid von der Drucksteigerungseinheiten 3 direkt in die Umgebung abgelassen werden. Der Ausgang der Drucksteigerungseinheit 3 ist dabei direkt mit dem Strömungsausgang 6 verbunden, wobei der Strömungsausgang 6 mit mehreren Reifen verbunden ist, wie es in der Figur 1 angedeutet ist. Um den am Strömungsausgang 6 vorliegenden Druck festzustellen, verfügt das Reifenbefüllungssystem über einen Drucksensor 11, welcher als Strömungsausgangssensor 11 ausgebildet ist, denn dieser ermittelt, wie der Figur 1 zu entnehmen ist, den Druck am Strömungsausgang 6. Um eine Überbelastung des Systems durch einen zu hohen Druck in den Leitungen des Reifenbefüllungssystems zu verhindern, ist in der Nähe und/oder direkt verbunden mit dem Strömungsausgang 6 ein Sicherungsventil 5 verbaut bzw. angeordnet, durch welchen ein Überdruck im System verhindert werden kann. Alternativ oder zusätzlich bevorzugt kann das Sicherungsventil 5 auch in die Drucksteigerungseinheit 3 integriert sein, insbesondere derart, dass dieses direkt mit dem Ausgang 3.2 verbunden ist.

In **Figur 2** ist ein ähnliches System wie in der Figur 1 gezeigt, wobei in der Figur 2 der Eingang der Drucksteigerungseinheit 3.1 und der Ausgang der Drucksteigerungseinheit 3.2 gekennzeichnet sind. Wie der Figur 2 zu entnehmen ist, ist sowohl der Strömungseingangssensor 10 als auch der Strömungsausgangssensor 11 Teil der Steuereinheit 12. Diese Steuereinheit 12 kann dabei auch als Steuergerät bezeichnet werden. Das in der Figur 2 verwendete schaltbare Ventil 13 ist ein 4/2 Wegeventil. In der in Figur 2 dargestellten Situation ist dabei der Druckeingangssensor 10 über das schaltbare Ventil 13 mit der Umgebung verbunden, sodass über den Drucksensor 10 bzw. den Strömungseingangssensor 10 ein "Festkleben" des schaltbaren Ventils 13 festgestellt werden kann.

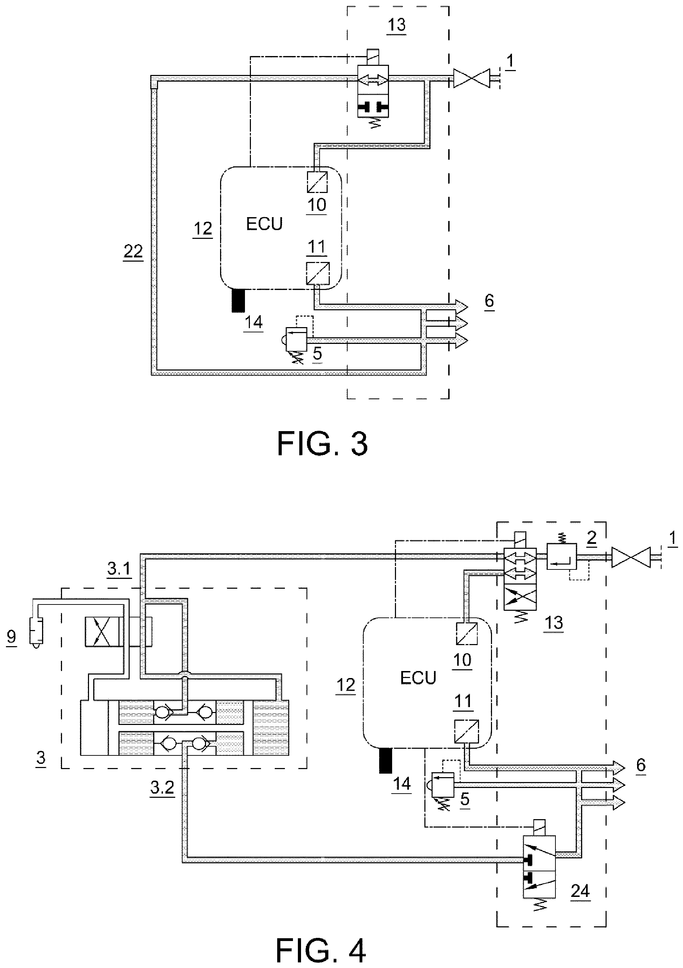

In **Figur 3** ist ein Reifenbefüllungssystem gezeigt, welches sich grundlegend von den in den Figuren 1 und 2 dargestellten Varianten unterscheidet. Bei der in Figur 3 dargestellten Variante ist der Strömungseingang 1 über die Verbindungsleitung 22 mit dem Strömungsausgang 6 direkt verbunden. Daher verfügt das Reifenbefüllungssystem gemäß der Figur 3 über keine Drucksteigerungseinheit.

In **Figur 4** ist ein Reifenbefüllungssystem ähnlich dem in der Figur 2 gezeigten Reifenbefüllungssystem gezeigt, wobei das System gemäß der Figur 4 ein Ablassventil 24 aufweist, welches durch die Steuereinheit 12 schaltbar ist. In anderen Worten kann daher die Steuereinheit 12 das Ablassventil 24 in seine zwei unterschiedlichen Schaltstellungen bringen. Das Ablassventil 24 ist dabei in der Figur 4 als ein Magnetventil ausgestaltet. Durch das Ablassventil 24 kann in einfacher Weise ein Druck am Strömungsausgang 6 reduziert werden, um so eine Überbefüllung des Reifen oder der zu befüllenden Reifen zu verhindern oder eine Druckreduzierung im Reifen zu realisieren.

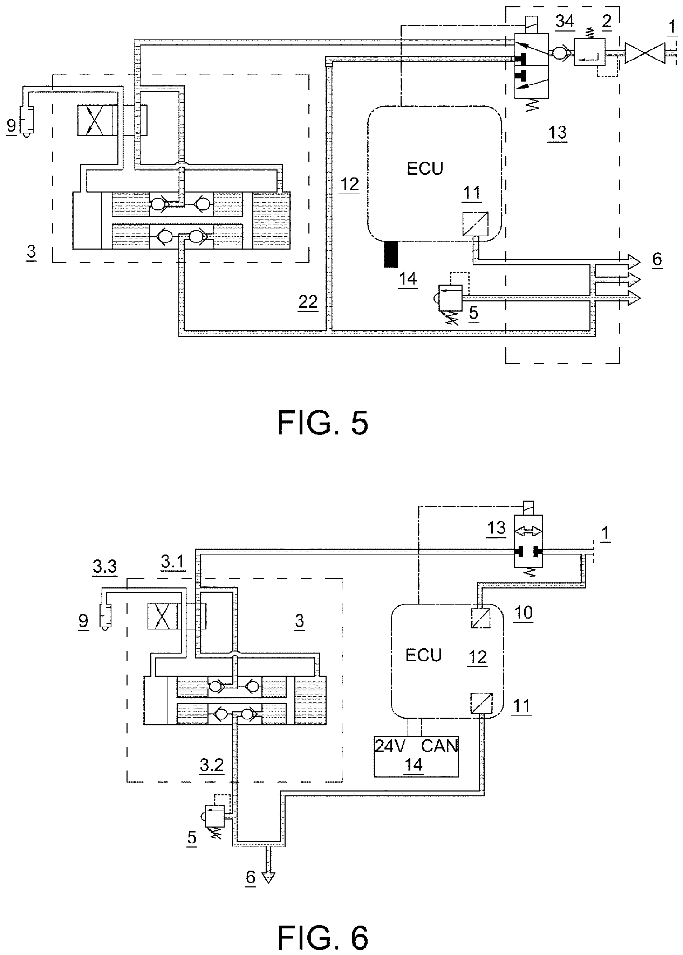

In **Figur 5** ist ein Reifenbefüllungssystem gezeigt, welches durch das schaltbare Ventil 13 sowohl in der Lage ist, den Strömungseingang 1 mit dem Strömungsausgang 6 über die Drucksteigerungseinheit 13 zu verbinden oder über die Verbindungsleitung 22. In anderen Worten kann daher das durch die Steuereinheit 12 geschaltete schaltbare Ventil 13 dafür sorgen, dass ein Luftstrom vom Strömungseingang 1 durch die Drucksteigerungseinheit 3 zu dem Strömungsausgang 6 fließt oder direkt von dem Strömungseingang 1 bzw. dem schaltbaren Ventil 13 über die Verbindungsleitung 22 zum Strömungsausgang 6 fließen kann. Darüber hinaus befindet sich zwischen dem schaltbaren Ventil 13 und dem Strömungseingang 1 ein Überströmventil 2 als auch ein Rückschlagventil 34, wobei das Rückschlagventil 34 dazu dient, dass kein Fluidrückfluss vom Inneren des Reifenbefüllungssystems zum Strömungseingang 1 erfolgen kann. Das Überströmventil 2 hingegen dient dabei dazu, sicherzustellen, dass die Druckluft am Strömungseingang 1 einen gewissen Mindestdruck aufweist.

In **Figur 6** ist ein Reifenbefüllungssystem gezeigt. Das Reifenbefüllungssystem weist eine Drucksteigerungseinheit 3 mit einem Eingang 3.1 und einem Ausgang 3.2 auf. Der Informationsausgang 14 der Steuereinheit 12 ist mit einem 24V CAN-BUS verbunden bzw. bildet einen solchen - zumindest teilweise - aus. Der Can Bus kann jedoch auch eine geringere Spannung aufweisen, z.B. 12 Volt oder 5 Volt. Dieser Can Bus kann dabei in jeglicher Ausführungsform der Erfindung vorgesehen sein. Die Drucksteigerungseinheit 3 ist über eine Entlüftung mit der Umgebung verbunden, wobei die Entlüftung einen Geräuschdämpfer 9 aufweist, welcher auch als Schalldämpfer bezeichnet werden kann. Das schaltbare Ventil 13 ist mit der Steuereinheit 12 verbunden, wobei das schaltbare Ventil 13 ein 2/2 Wegeventil ist. Das 2/2 Wegeventil bzw. das schaltbare Ventil 13 liegt in einer Zuleitung der Drucksteigerungseinheit 3 bzw. verbindet oder trennt strömungstechnisch den Eingang 3.1 der Drucksteigerungseinheit 3 von dem Strömungseingang 1. Sowohl der Strömungseingang 1 als auch der Strömungsausgang 6 sind jeweils mit einem Drucksensor verbunden, sodass dort der Druck gemessen bzw. erfasst werden kann.

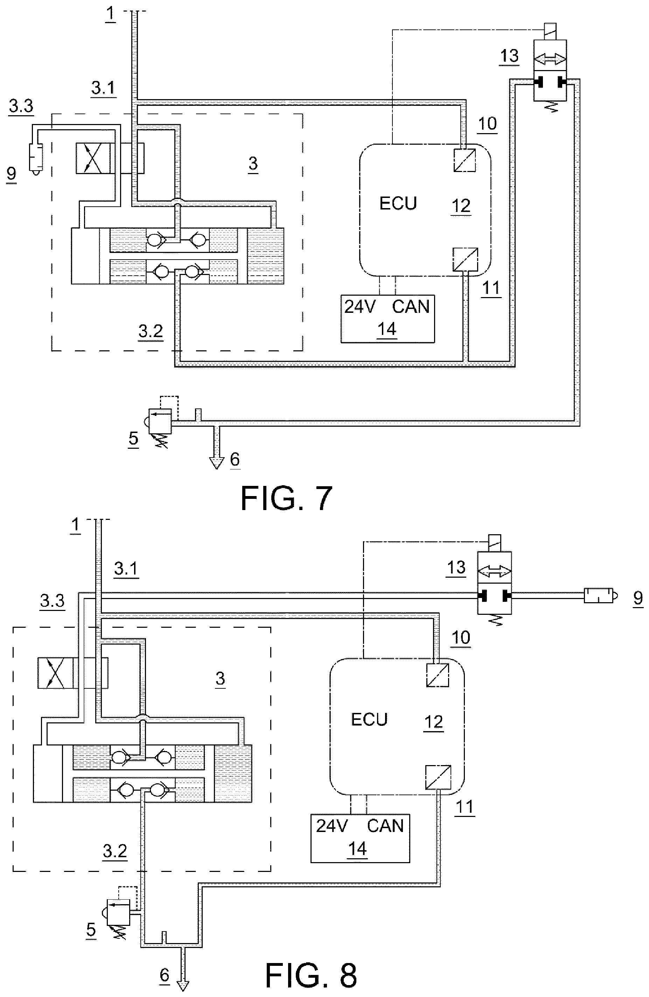

In **Figur 7** ist eine der Figur 6 ähnliche Ausgestaltung gezeigt. Das schaltbare Ventil 13 ist ebenfalls mit der Steuereinheit 12 verbunden, wobei das schaltbare Ventil 13 ein 2/2 Wegeventil ist. Das 2/2 Wegeventil bzw. das schaltbare Ventil 13 liegt in einer Ableitung der Drucksteigerungseinheit 3 bzw. verbindet oder trennt strömungstechnisch den Ausgang 3.2 der Drucksteigerungseinheit 3 von dem Strömungsausgang 6. Sowohl der Strömungseingang 1 als auch der Strömungsausgang 6 sind jeweils mit einem Drucksensor 10, 11 verbunden, sodass dort der Druck gemessen bzw. erfasst werden kann.

In **Figur 8** ist eine der Figur 6 oder 7 ähnliche Ausgestaltung gezeigt. Das schaltbare Ventil 13 ist hier jedoch in der Entlüftung der Drucksteigerungseinheit 3 angeordnet.

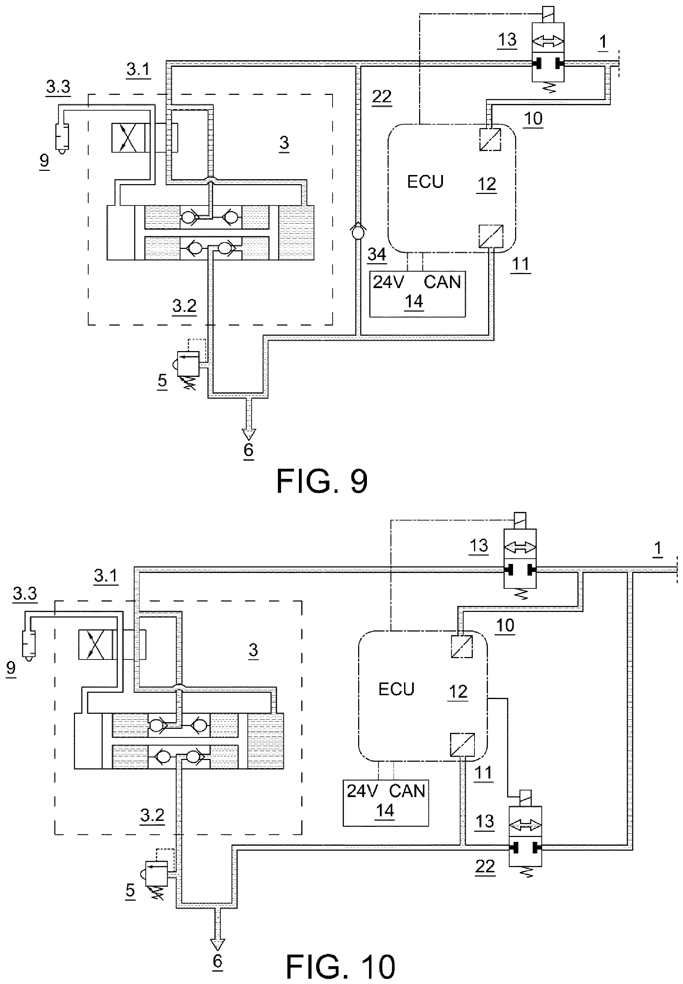

In **Figur 9** ist eine weitere Ausführungsform eines Reifenbefüllungssystems gezeigt. Dieses Reifenbefüllungssystem weist, ähnlich der Ausführungsform in der Figur 5, eine Verbindungsleitung 22 auf, welche den Strömungseingang 1 direkt, daher unter Umgehung der Drucksteigerungseinheit 3, mit dem Strömungsausgang 6 verbinden kann. Um eine Rückströmung durch die Verbindungsleitung 22 verhindern zu können, ist innerhalb der Verbindungsleitung 22 ein Rückschlagventil 34 angeordnet. Das schaltbare Ventil 13 kann die Verbindungsleitung 22 als auch die Drucksteigerungseinheit 3 mit dem Strömungseingang 1 verbinden oder beide zeitgleich voneinander trennen. Vorteilhafterweise ist in der dargestellten Ausführungsform der angestrebte Druck am Strömungsausgang 1 nicht mehr als 15% niedriger als der anzustrebende Reifendruck oder der Druck am Strömungsausgang 6.

In **Figur 10** ist eine weitere Ausführungsform eines Reifenbefüllungssystems gezeigt. Diese Ausführungsform ist insbesondere dadurch gekennzeichnet, dass in der Verbindungsleitung 22 als auch in der Zuleitung zu der Drucksteigerungseinheit 3 jeweils ein schaltbares Ventil 13 angeordnet sind. Hierdurch ist es möglich auch große Leckage eines Reifens entgegenwirken zu können, insbesondere durch die Verbindungsleitung 22. Die Verbindungsleitung 22, welche auch als Bypass bezeichnet werden kann, kann dabei auch in anderen Ausführungsformen mit einem schaltbaren Ventil und/oder mit einem Rückschlagventil 34 ausgestattet sein.

### Bezugszeichenliste:

- 1: - Strömungseingang
- 2: - Überströmventil
- 3: - Drucksteigerungseinheit
- 3.1: - Eingang der Drucksteigerungseinheit (3)
- 3.2: - Ausgang der Drucksteigerungseinheit (3)
- 5: - Sicherheitsventil
- 6: - Strömungsausgang
- 9: - Geräuschdämpfer
- 10: - Drucksensor / Strömungseingangssensor
- 11: - Drucksensor / Strömungsausgangssensor
- 12: - Steuereinheit
- 13: - schaltbares Ventil
- 14: - Informationsausgang
- 22: - Verbindungsleitung
- 24: - Ablassventil
- 34: - Rückschlagventil

## Patentansprüche

1. Nutzfahrzeug umfassend ein Reifenbefüllungssystem,
wobei das Nutzfahrzeug ein Nutzfahrzeuganhänger ist,
wobei das Reifenbefüllungssystem eine Steuereinheit (12), einen Strömungseingang (1), einen Drucksensor (10, 11), ein schaltbares, insbesondere ein elektrisch und/oder magnetisch schaltbares, Ventil (13) und einen Strömungsausgang (6) umfasst,
wobei der Strömungseingang (1) mit einem Druckluftsystem, insbesondere mit einem Druckluftsystem einer Luftfeder, verbunden ist oder verbindbar ist, wobei der Strömungsausgang (6) mit einem Druckraum eines Reifens verbunden ist oder verbindbar ist,
wobei die Steuereinheit (12) mit dem Drucksensor (10, 11) und dem schaltbaren Ventil (13) verbunden ist,
wobei der Drucksensor (10, 11) in der Lage ist, einen Druck am Strömungsausgang (6) oder am Strömungseingang (1) zu erfassen,
wobei die Steuereinheit (12) derart ausgebildet ist, dass diese das schaltbare Ventil (13) in Abhängigkeit von dem erfassten Druck öffnet und/oder schaltet, insbesondere wenn der erfasste Druck am Strömungsausgang (6) einen Schwellwert unterschreitet,
wobei das Reifenbefüllungssystem eine Drucksteigerungseinheit (3) aufweist,
wobei, dass die Drucksteigerungseinheit (3), welche insbesondere ein Druckerhöher sein kann, einen oder zwei Doppelkolben oder doppeltwirkende Zylinder oder doppeltwirkende Kolben aufweist, und
wobei die Steuereinheit (12) eine elektronische Steuer- und/oder Kontrolleinheit (ECU) ist,
**dadurch gekennzeichnet, dass** die Drucksteigerungsfähigkeit und/oder das Drucksteigerungsverhältnis der Drucksteigerungseinheit (3) in einem Bereich von 1,2 bis 1,8, liegt.

2. Nutzfahrzeug gemäß Anspruch 1,
wobei die Drucksteigerungseinheit (3) einen Energieanschluss auf, wobei durch den Energieanschluss die zur Drucksteigerung benötigte Energie in die Drucksteigerungseinheit (3) gelangt oder gelangen kann,
wobei insbesondere der Energieanschluss der Drucksteigerungseinheit (3) mit dem Strömungseingang (1) verbunden ist.

3. Nutzfahrzeug gemäß einem der vorhergehenden Ansprüche,
wobei das Reifenbefüllungssystem einen Druckeingangssensor (10) aufweist,
wobei der Druckeingangssensor (10) in der Lage ist, einen Druck am Strömungseingang (1) zu erfassen.

4. Nutzfahrzeug gemäß einem der vorhergehenden Ansprüche,
wobei das schaltbare Ventil (13) ein 2/2 Wegeventil ist.

5. Nutzfahrzeug gemäß einem der Ansprüche 1-3,
wobei das schaltbare Ventil (13) ein 3/2 Wegeventil oder ein 4/2 Wegeventil ist.

6. Nutzfahrzeug gemäß einem der vorhergehenden Ansprüche,
wobei der Drucksensor und/oder die Drucksensoren (10, 11), insbesondere der Druckeingangssensor (10), auf einer Platine der Steuereinheit (12) angeordnet ist/sind.

7. Nutzfahrzeug gemäß einem der vorhergehenden Ansprüche,
wobei das Reifenbefüllungssystem eine Verbindungsleitung (22) aufweist, wobei die Verbindungsleitung (22), insbesondere direkt, den Strömungseingang (1) über das schaltbare Ventil (13) mit dem Strömungsausgang (6) verbindet.

8. Nutzfahrzeug gemäß einem der vorhergehenden Ansprüche,
wobei zwischen dem Strömungseingang (1) und dem schaltbaren Ventil (13) ein Rückschlagventil (34) und/oder ein Überströmventil (2) ohne Rückströmung angeordnet ist/sind.

9. Nutzfahrzeug gemäß einem der vorhergehenden Ansprüche,
wobei der Strömungseingang (1) mit einem Druckluftsystem des Nutzfahrzeugs, insbesondere mit einem Druckluftsystem einer Luftfeder des Nutzfahrzeugs, verbunden ist oder verbindbar ist, und/oder wobei der Strömungsausgang (6) mit einem Druckraum eines Reifens des Nutzfahrzeugs verbunden ist oder verbindbar ist.

10. Nutzfahrzeug gemäß einem der vorhergehenden Ansprüche,
wobei der Nutzfahrzeuganhänger ein Sattelauflieger ist.

11. Verfahren zum Betreiben eines Reifenbefüllungssystems eines Nutzfahrzeuganhängers nach einem der vorhergehenden Ansprüche, umfassend die Schritte:
- Bestimmen des Druckes an einem Strömungsausgang (6) des Reifenbefüllungssystems;
- Vergleichen des ermittelten Drucks mit einem Solldruck durch eine Steuereinheit (12);
- insbesondere Betätigen einer Drucksteigerungseinheit (3) des Reifenbefüllungssystems wenn der Druck unter dem Solldruck liegt.

## Claims

1. Commercial vehicle comprising a tire inflation system,
where the commercial vehicle is a commercial vehicle trailer,
wherein the tire inflation system comprises a control unit (12), a flow inlet (1), a pressure sensor (10, 11), a switchable, in particular an electrically and/or magnetically switchable, valve (13) and a flow outlet (6),
wherein the flow inlet (1) is or can be connected to a compressed air system, in particular to a compressed air system of an air spring,
wherein the flow outlet (6) is or can be connected to a pressure chamber of a tire,
wherein the control unit (12) is connected to the pressure sensor (10, 11) and the switchable valve (13),
wherein the pressure sensor (10, 11) is able to detect a pressure at the flow outlet (6) or at the flow inlet (1),
wherein the control unit (12) is designed such that it opens and/or switches the switchable valve (13) as a function of the detected pressure, in particular when the detected pressure at the flow outlet (6) falls below a threshold value,
wherein the tire inflation system has a pressure increasing unit (3), wherein the pressure increasing unit (3), which may in particular be a pressure booster, has one or two double pistons or double-acting cylinders or double-acting pistons, and
wherein the control unit (12) is an electronic control and/or monitoring unit (ECU),
**characterized in that** the pressure increasing capability and/or the pressure increasing ratio of the pressure increasing unit (3) is in a range from 1.2 to 1.8.

2. Commercial vehicle according to claim 1,
wherein the pressure increasing unit (3) has an energy connection, wherein the energy required to increase the pressure reaches or is able to reach the pressure increasing unit (3) through the energy connection, wherein, in particular, the energy connection of the pressure increasing unit (3) is connected to the flow inlet (1).

3. Commercial vehicle according to any of the preceding claims,
wherein the tire inflation system has a pressure inlet sensor (10), wherein the pressure inlet sensor (10) is able to detect a pressure at the flow inlet (1).

4. Commercial vehicle according to any of the preceding claims,
wherein the switchable valve (13) is a 2/2-way valve.

5. Commercial vehicle according to any of the preceding claims,
wherein the switchable valve (13) is a 3/2-way valve or a 4/2-way valve.

6. Commercial vehicle according to any of the preceding claims,
wherein the pressure sensor and/or the pressure sensors (10, 11), in particular the pressure inlet sensor (10), is/are arranged on a circuit board of the control unit (12).

7. Commercial vehicle according to any of the preceding claims,
wherein the tire inflation system has a connecting line (22),
wherein the connecting line (22) connects, in particular directly, the flow inlet (1) to the flow outlet (6) via the switchable valve (13).

8. Commercial vehicle according to any of the preceding claims,
wherein a back pressure valve (34) and/or an overflow valve (2) without backflow is/are arranged between the flow inlet (1) and the switchable valve (13).

9. Commercial vehicle according to any of the preceding claims,
wherein the flow inlet (1) is or can be connected to a compressed air system of the commercial vehicle, in particular to a compressed air system of an air spring of the commercial vehicle, and/or
wherein the flow outlet (6) is or can be connected to a pressure chamber of a tire of the commercial vehicle.

10. Commercial vehicle according to any of the preceding claims,
where the commercial vehicle trailer is a semitrailer.

11. Method of operating a tire inflation system of a commercial vehicle trailer according to any one of the preceding claims,
comprising the steps:
- Determining the pressure at a flow outlet (6) of the tire inflation system;
- Comparing of the determined pressure with a target pressure by a control unit (12);
- In particular, actuating a pressure increasing unit (3) of the tire inflation system when the pressure is below the target pressure.

## Revendications

1. Véhicule utilitaire comprenant un système de gonflage des pneus,
le véhicule utilitaire étant une remorque de véhicule utilitaire,
le système de gonflage des pneus comprenant une unité de commande (12), une entrée de flux (1), un capteur de pression (10, 11), une vanne commutable (13), en particulier commutable par voie électrique et/ou magnétique, et une sortie de flux (6),
l'entrée de flux (1) étant reliée ou pouvant être reliée à un système à air comprimé, en particulier à un système à air comprimé d'un ressort pneumatique,
la sortie de flux (6) étant reliée ou pouvant être reliée à une chambre de pression d'un pneu,
l'unité de commande (12) étant reliée au capteur de pression (10, 11) et à la vanne commutable (13),
le capteur de pression (10, 11) étant capable de détecter une pression à la sortie de flux (6) ou à l'entrée de flux (1),
l'unité de commande (12) étant conçue de manière à ouvrir et/ou commuter la vanne commutable (13) en fonction de la pression détectée, en particulier lorsque la pression détectée à la sortie de flux (6) est inférieure à une valeur seuil,
le système de gonflage des pneus comportant une unité d'augmentation de pression (3),
l'unité d'augmentation de pression (3), qui peut être en particulier un dispositif multiplicateur de pression, comportant un ou deux pistons doubles ou cylindres à double effet ou pistons à double effet, et
l'unité de commande (12) étant une unité de commande et/ou de contrôle électronique (ECU),
**caractérisé en ce que** la capacité d'augmentation de pression et/ou le rapport d'augmentation de pression de l'unité d'augmentation de pression (3) se situe dans une plage de 1,2 à 1,8.

2. Véhicule utilitaire selon la revendication 1,
dans lequel l'unité d'augmentation de pression (3) comprend une connexion d'énergie, l'énergie nécessaire à l'augmentation de pression parvient ou peut parvenir dans l'unité d'augmentation de pression (3) par la connexion d'énergie,
en particulier, la connexion d'énergie de l'unité d'augmentation de pression (3) est reliée à l'entrée de flux (1).

3. Véhicule utilitaire selon l'une des revendications précédentes,
dans lequel le système de gonflage des pneus comporte un capteur d'entrée de pression (10),
le capteur d'entrée de pression (10) est capable de détecter une pression à l'entrée de flux (1).

4. Véhicule utilitaire selon l'une des revendications précédentes,
dans lequel la vanne commutable (13) est une vanne à 2 voies/2 positions.

5. Véhicule utilitaire selon l'une des revendications 1 à 3,
dans lequel la vanne commutable (13) est une vanne à 3 voies/2 positions ou une vanne à 4 voies/2 positions.

6. Véhicule utilitaire selon l'une des revendications précédentes,
dans lequel le capteur de pression et/ou les capteurs de pression (10, 11), en particulier le capteur d'entrée de pression (10), sont disposés sur une carte de l'unité de commande (12).

7. Véhicule utilitaire selon l'une des revendications précédentes,
dans lequel le système de gonflage des pneus comprend une conduite de communication (22), la conduite de communication (22) reliant, en particulier directement, l'entrée de flux (1) à la sortie de flux (6) via la vanne commutable (13).

8. Véhicule utilitaire selon l'une des revendications précédentes,
dans lequel un clapet anti-retour (34) et/ou une vanne de décharge (2) sans reflux est/sont disposé(s) entre l'entrée de flux (1) et la vanne commutable (13).

9. Véhicule utilitaire selon l'une des revendications précédentes,
dans lequel l'entrée de flux (1) est reliée ou peut être reliée à un système à air comprimé du véhicule utilitaire, en particulier à un système à air comprimé d'un ressort pneumatique du véhicule utilitaire, et/ou
la sortie de flux (6) est reliée ou peut être reliée à une chambre de pression d'un pneu du véhicule utilitaire.

10. Véhicule utilitaire selon l'une des revendications précédentes,
dans lequel la remorque de véhicule utilitaire est une semi-remorque.

11. Procédé pour faire fonctionner un système de gonflage des pneus d'une remorque de véhicule utilitaire selon l'une des revendications précédentes, comprenant les étapes consistant à :
- déterminer la pression à une sortie de flux (6) du système de gonflage des pneus ;
- comparer la pression déterminée à une pression de consigne à l'aide d'une unité de commande (12) ;
- en particulier, actionner une unité d'augmentation de pression (3) du système de gonflage des pneus lorsque la pression est inférieure à la pression de consigne.
